# EUROPÄISCHE PATENTSCHRIFT

(11) **EP 2 285 713 B1**
(45) Veröffentlichungstag und Bekanntmachung des Hinweises auf die Patenterteilung: **02.04.2014**
(21) Anmeldenummer: 09753614.8
(22) Anmeldetag: 11.05.2009
(51) Int. Cl.: B65G 1/04, B65G 1/137, B65G 47/51

(54) **VERFAHREN ZUM ZUFÜHREN VON BESCHICKUNGSGUT ZU EINEM ZIELORTSPEICHER, VORZUGSWEISE HOCHREGALLAGER IN EINER KOMMISSIONIERANLAGE**
METHOD FOR FEEDING SUPPLY GOODS TO A DESTINATION STORAGE, PREFERABLY A HIGH-BAY WAREHOUSE AREA OF A PICKING SYSTEM
PROCÉDÉ DE STOCKAGE POUR AMENER DES CHARGES JUSQU À UN MAGASIN LOCAL CIBLE, DE PRÉFÉRENCE UN RAYONNAGE EN HAUTEUR DANS UNE INSTALLATION DE PRÉPARATION DE COMMANDES

(30) Priorität: 27.05.2008 DE 102008025227
(43) Veröffentlichungstag der Anmeldung: 23.02.2011
(73) Patentinhaber: Knapp AG, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2009/003314
(87) Internationale Veröffentlichungsnummer: WO 2009/143959

(56) Entgegenhaltungen:
- EP-A1- 0 457 158
- EP-A1- 0 610 780
- US-A- 5 403 147

## Beschreibung

Die Erfindung betrifft ein Verfahren zum Zuführen von Beschickungsgut in Form von Gebinden, Behältern, Kartons, Einzel- und/oder Bündelgut von einer Zuführstation über eine Zuführstrecke zu einem Zielortspeicher oder zu einem Speicherbediengerät des Zielortspeichers, vorzugsweise eines Hochregallagers in einer Kommissionieranlage gemäß Obergriff des Patentanspruchs 1.

Bekanntermaßen werden im Wareneingangsbereich von Kommissionieranlagen per Lastkraftwagen Waren angeliefert und diese üblicherweise in Transportbehälter umgepackt, die über stationäre Förderstrecken oder schienenungebundene Hilfsfahrzeuge zu einem Regalbediengerät des Hochregallagers transportiert und dem Regalbediengerät zwecks Einlagerung übergeben werden. Das Regalbediengerät lagert dann die mit Waren bestückten Transportbehälter in das Hochregallager ein und hat hierfür einen bestimmten Spitzendurchsatz. Um keinen Stau entstehen zu lassen, kann die Einlagerkapazität der Regalbediengeräte auf die Spitzenlast ausgelegt werden. Wird die Einlagerkapazität von den Umpackstationen erhöht, werden nach dem Stand der Technik mehrere Regalbediengeräte eingesetzt, die die umgepackten Transportbehälter ohne Entstehung eines Staus abarbeiten. Zusätzliche Regalbediengeräte sind jedoch kostenaufwändig und eignen sich eher für Hochregallager mit mehreren Lagergassen und weniger für Hochregallager mittelgroßer bis kleiner Lagerkapazität bzw. Umschlaghäufigkeit.

Aus EP 0 457 158 A1 ist ein gattungsgemäßes Verfahren zum Zuführen von Beschickungsgut von einer Zuführstation zu einem Zielortspeicher bekannt, wobei ein Zwischenspeicher vorgesehen, in welchem das zugeführte Beschickungsgut einzeln zwischengespeichert wird, bevor es zum Zielortspeicher gelangt. Das Zwischenspeichersystem nimmt hierbei einen vergleichsweise großen Raum ein.

Aufgabe der Erfindung ist, ein Verfahren der eingangs genannten Art bereitzustellen, dessen Zwischenpuffersystem raumsparend aufgebaut ist und bei einfachem Aufbau selbst in Spitzenzeiten einer erhöhten Anlieferung von Beschickungsgut beim Wareneingang und ohne Staubildung beim Wareneingang ein zuverlässiges und vergleichsweise schnelles Einlagern des Beschickungsgutes beim Zielortspeicher selbst bei Verwendung nur eines einzigen Speicherbediengeräts ermöglicht.

Gelöst wird die Aufgabe durch ein Verfahren mit den Merkmalen nach Anspruch 1, vorteilhaft weitergebildet durch die Merkmale nach den Ansprüchen 2 bis 8.

Wesen der Erfindung ist, dass das Beschickungsgut vor einer Aufnahme im Zwischenpuffer des Zwischenpuffersystems in einer Palettierungs-/ Depalettierungstation palettiert und nach einer Zwischenpufferung im Zwischenpuffer vor Abgabe an den Zielortspeicher wieder depalettiert wird, wobei der Zwischenpuffer reversibel antreibbar ist.

Dadurch kann das Zwischenspeichersystem im Gegensatz zum vorgenannten Stand der Technik nach EP 0 457 158 A1 besonders platzsparend gestaltet werden, wobei während oder in Voraussicht einer Einlager-Überlast im Zielortspeicher im Zeitbereich der Zuführung das platzsparende Zwischenpuffersystem mit dem reversibel antreibbaren Zwischenpuffer das Beschickungsgut aufnimmt und nach einer Einlager-Überlast oder nach Beendigung der Gefahr einer Einlager-Überlast dem Zielortspeicher wieder abgibt. Der Zwischenpuffer kann eine horizontale, bodennahe oder über Kopf angeordnete, lineare oder geschlossene Pufferstrecke, vorzugsweise ein staufähiger Kettenförderer oder eine Staurollenbahn, sein. Auch kann der Zwischenpuffer ein reversibler Vertikalförderer, ein reversibler Paternoster oder ein reversibler Spiralförderer sein.

Insbesondere wird bei lastspezifischer Aufnahmefähigkeit, d.h. bei ausreichender Aufnahmefähigkeit des Zielortspeichers, das am Zwischenpuffer zwischengelagerte Beschickungsgut über das Depalletierungssystem des Zwischenpuffersystems dem Zielortspeicher automatisch zugeführt.

Das Zwischenpuffersystem nimmt vorzugsweise das Beschickungsgut, während oder in Voraussicht einer Einlager-Überlast im Zielortspeicher, geordnet und definiert vollautomatisch oder zumindest teilautomatisch auf, und gibt das zwischengelagerte Beschickungsgut entsprechend einer ausgewählten logistischen Zuführungsstrategie wieder definiert, voll- oder zumindest teilautomatisch dem Zielortspeicher bzw. dem Speicherbediengerät des Zielortspeichers ab.

Vorzugsweise weist eine in der Zuführstrecke angeordnete Entscheidungsstation während oder in Voraussicht einer Einlager-Überlast des Zielortspeichers das Beschickungsgut dem Zwischenpuffersystem zu.

Vorzugsweise ist ein übergeordnetes Steuerungs- und Warehousemanagementsystem vorgesehen, das die Entscheidungsstation als ausführendes Gewerk bedient bzw. ansteuert.

Die Entscheidungsstation erkennt basierend auf der Auslastung des Zielortspeichers das Beschickungsgut durch Beschickungsgut- bzw. Behälterverfolgung oder Identifikation.

Insbesondere ist eine Zuführung vom Zwischenpuffersystem zum Zielortspeicher vorgesehen, bei welcher eine Aussteuerung von vorrangig benötigtem Beschickungsgut über eine nachgereihte Entscheidungsstation noch ermöglich wird.

Das vorrangig benötigte Beschickungsgut kann aber auch bereits bei der Entscheidungsstation erkannt und direkt dem Zielortspeicher zugeführt werden.

Das erfindungsgemäße Verfahren beschreibt die temporäre Zwischenpufferung von Beschickungsgut, d.h. von Gebinden, Behältern, Kartons, Einzel- und Bündelgut, bei Einlager-Überlast eines als Bestimmungsort definierten primären Speicherortes, vorzugsweise eines Hochregallagers, während eines Einlagerns.

Das System besteht aus einem Zuführbereich, vorzugsweise dem Wareneingangsbereich, einer Entscheidungsstation, dem primären Zielortspeicher und dem Zwischenpuffersystem.

Werden z.B. aus dem Wareneingangsbereich ausgeführte Gebinde, welche für den primären Zielort bestimmt sind, zugeführt, und befindet sich der primäre Zielort im Zeitbereich der Zuführung in Überlast, werden über die Entscheidungsstation die Gebinde dem Zwischenpuffersystem zugeführt, um sie dort für den benötigten Zeitraum zwischenzupuffern.

Der Zwischenpuffer kann verschiedenarti vollautomatisch, (teilautomatisch) ausgeführt sein, erfindungsgemäß ist ein Palettier- und Depalettierungssystem vorgesehen. Dieses besteht vorzugsweise aus einem Leerpalettenmagazin, einer Palettier- und Depalletierungseinheit und Palettenpufferstrecken.

Die dem Zwischenpuffer zugeführten Produkte werden vorzugsweise beim Einsatz des Palettierungs- und Depalletierungssystems einer aus dem Leerpalettenmagazin vereinzelten Leerplatte, welche als Trägersystem dient, zugeführt und auf der Pufferstrecke zwischengelagert.

Die Ausführungsanordnungen der Pufferstrecken lassen alle logistischen Varianten von Ein- und Auslagerungsstrategien zu (z.B. FIFO - first in, first out; oder LIFO -last in, first out).

Bei lastspezifischer Aufnahmefähigkeit, d.h. bei ausreichender Aufnahmefähigkeit des primären Zielpuffers werden automatisch die am Zwischenpuffer zwischengelagerten Produkte über das Depalettierungssystem der Strecke für den primären Zielort zugeführt.

Besonderer Vorteil der Erfindung ist, dass Beschickungsgut selbst in kleinere bis mittelgroße Hochregallager, die gegebenenfalls nur ein einziges Regalbediengerät besitzen, ohne Staubildung beim Wareneingang selbst in Spitzenzeiten einer Anlieferung eingelagert werden kann. Da die Einlagerung des Beschickungsguts in das System ohne Staubildung beim Wareneingang, d.h. ohne Wartezeit, erfolgt, ist das Beschickungsgut ohne Zeitverzug dem Zentralrechner bzw. dem übergeordneten Steuer- und Warehousesystem bekannt und kann entsprechend zeitnah bzw. aktuell verwaltet und auch angesteuert werden.

Weitere Vorteile und Einzelheiten der Erfindung werden nachfolgend anhand von Ausführungsbeispielen unter Bezugnahme auf die beigefügten Zeichnungen näher beschrieben; es zeigen:
- Figur 1: eine Systemskizze einer Zuführung von Beschickungsgut zu einem Hochregallager mit einem Zwischenpuffersystem, und
- Figuren 2 bis 4: ein Zwischenpuffersystem für stapelbares Beschickungsgut mit einem Lagenpalettierer in einer schematischen Seitenansicht, Draufsicht und in einer Perspektivansicht.

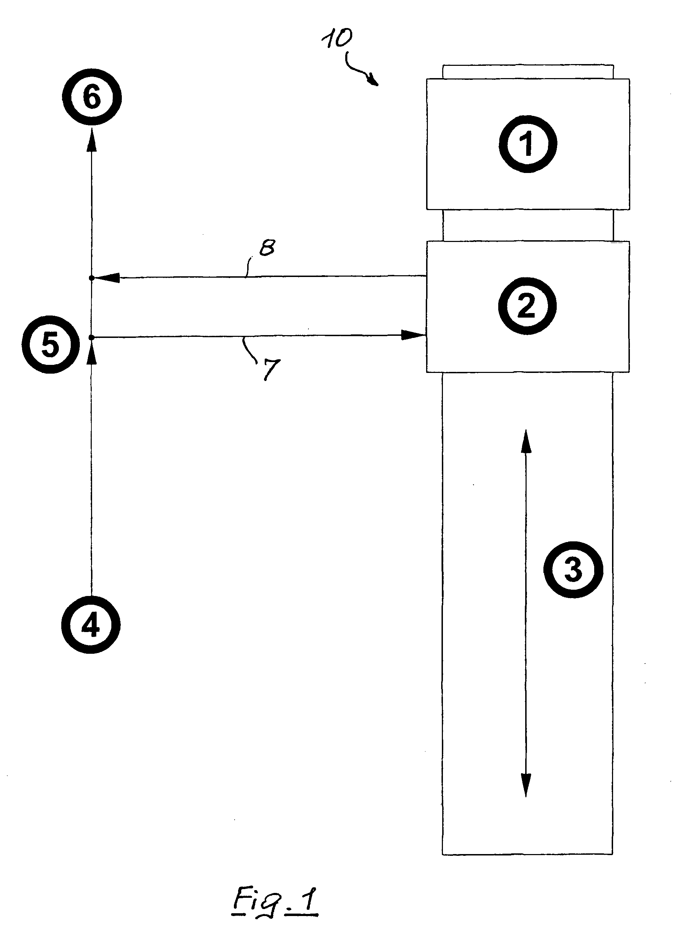

Gemäß Figur 1 ist in einer Prinzipskizze in einem Zwischenpuffersystem 10 die temporäre Zwischenpufferung von Beschickungsgut 11 in Form von Gebinden bei Einlager-Überlast eines als Bestimmungsort definierten Hochregallagers 6 einer Kommissionieranlage gezeigt.

Das System besteht aus einer Zuführstrecke 4 in Form einer Fördertechnik, z.B. angetriebene Staurollenbahn, Kettenförderer oder Förderband, dem ein nicht veranschaulichter Wareneingangsbereich vorgelagert ist. Der Wareneingangsbereich wird von Lastkraftwagen angefahren. Es werden die Waren abgeladen, in Transportbehälter umgepackt, und es werden die umgepackten mit Waren bestückten Transportbehälter, nämlich das Beschickungsgut, in das System selbst in Spitzenzeiten einer erhöhten Warenanlieferung unverzüglich ohne Staubildung beim Wareneingang eingegeben und auf der angetriebenen Fördertechnik in Richtung Hochregallager 6 gefördert.

In der Zuführstrecke 4 zum Hochregallager 6 befindet sich eine Entscheidungsstation 5, die während oder in Voraussicht einer Einlager-Überlast des Hochregallagers, d.h. bei Erreichung einer Einlagerauslastung eines einstellbaren Schwellwertes (z.B. 97%) eines bzw. der Regalbediengeräte während eines Einlagerns in das Hochregallager im Zeitbereich einer Zuführung von Beschickungsgut auf der Zuführstrecke 4, das Beschickungsgut 11 dem Zwischenpuffersystem 10 zuweist.

Die Entscheidungsstation 5 basierend auf der Einlagerauslastung des Hochregallagers 6 erkennt das Beschickungsgut 11 durch Gebindeverfolgung oder durch Identifikation. Es versteht sich, dass das Beschickungsgut hinreichend beispielsweise durch Barcode oder Transponder gekennzeichnet, d.h. identifizierbar ist.

Die Erkennung kann beispielsweise dadurch erfolgen, dass das mit einem Transponder versehene Beschickungsgut 11 durch einen Scantunnel mit Sende- und Empfangsantenne gefördert und dabei durch eine an einen übergeordneten Steuerrechner angeschlossene Steuer-/Empfangs-Einheit automatisch erkannt und anschließend durch Steueraktionen des übergeordneten Steuerrechners, der der Zentralcomputer des Systems ist, weiterbehandelt wird.

Im Ausführungsbeispiel der Zeichnungen wird bei Erreichung einer Einlagerauslastung des Hochregallagers eines einstellbaren Schwellwertes (z.B. 97%) im Zeitbereich der Zuführung das Beschickungsgut 11 nicht mehr dem Hochregallager 6 direkt zugeführt, sondern über eine nicht veranschaulichte Ausschleuseinrichtung, z.B. einem Querschieber, bei der Entscheidungsstation 5 auf eine querverlaufende angetriebene Förderstrecke 7 in Form eines weiteren Förderbands geschoben und von dort dem Zwischenpuffersystem 10 zugeführt, um das Beschickungsgut 11 dort für den benötigten Zeitraum zwischenzupuffern.

Der Zwischenpuffer kann verschiedenartig vollautomatisch, (teilautomatisch) ausgeführt sein. Erfindungsgemäß ist ein Palettier- und Depalettierungssystem vorgesehen. Dieses besteht vorzugsweise aus einem Leerpalettenmagazin 1, einer Palettier- und Depalletierungseinheit 2 und Leerpalettenpufferstrecken 9.

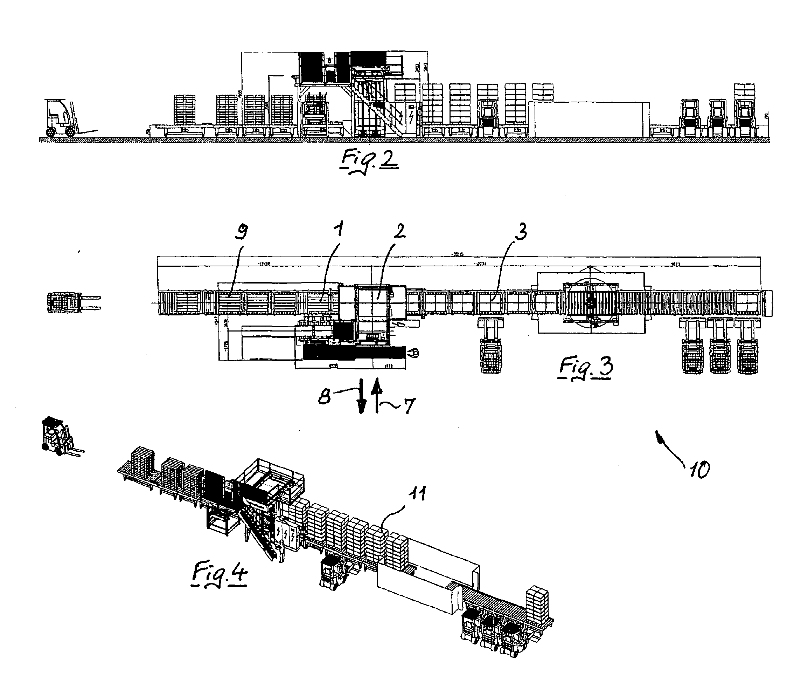

Das dem Zwischenpuffersystem 10 zugeführte Beschickungsgut 11 wird vorzugsweise bei einem Einsatz eines Palettierungs-, Depalletierungssystems einer aus dem Leerpalettenmagazin 1 vereinzelten Leerplatte, welche als Trägersystem dient, zugeführt und auf dem eigentlichen Zwischenpuffer 3 in Form einer Pufferstrecke zwischengelagert. Ein derartiges Palettierungs-/Depalettierungssystem ist beispielsweise prinzipiell in den Figuren 2 bis 4 in Form eines Lagenpalettierers veranschaulicht.

Die Ausführungsanordnungen der Pufferstrecken lassen alle logistischen Varianten von Ein- und Auslagerungsstrategien zu (z.B. FIFO - first in, first out; oder LIFO -last in, first out).

Bei lastspezifischer Aufnahmefähigkeit, d.h. bei ausreichender Aufnahmefähigkeit des Hochregallagers werden automatisch die am Zwischenpuffer 3 zwischengelagerten Produkte über das Depalettierungssystem und die weitere Förderstrecke 8, welche nach der Entscheidungstation 5 wieder in die Zuführstrecke 4 einmündet, dem Hochregallager 6 zugeführt.

Das Zwischenpuffersystem 10 ist mit einem reversibel antreibbaren Zwischenpuffer 3 versehen, der gemäß Zeichnungen eine horizontale bodennahe oder über Kopf angeordnete Pufferstrecke, vorzugsweise ein staufähiger Kettenförderer, ist.

Der Zwischenpuffer 3 kann eine lineare oder geschlossene Pufferstrecke sein.

Der Zwischenpuffer 3 kann aber auch ein reversibler Vertikalförderer, ein umlaufender Paternoster oder ein reversibler Spiralförderer sein.

Im besonderen ist das Zwischenpuffersystem 10 für stapelbares Beschickungsgut ausgelegt.

Das Zwischenpuffersystem 10 kann auch über einen Knickarmroboter bedienbar sein.

Die beiden mit der Zuführstrecke 4 verbundenen Förderstrecken 7 und 8 zum und vom Zwischenpuffersystem 10 verlaufen vorzugsweise zueinander parallel, wobei die Förderstrecke 7 an die Entscheidungsstation 5 angeschlossen und für das Abführen von Beschickungsgut zum Zwischenspeichersystem 10 vorgesehen ist, während die Förderstrecke 8 nach der Entscheidungsstation 5 in die Zuführstrecke 4 einmündet und für die Zurückleitung des zwischengelagerten Beschickungsgutes 11 zum Zielortspeicher 6 vorgesehen ist.

Das Zwischenpuffersystem 10 kann anstelle der beiden nichtreversiblen vorzugsweise parallelen Förderstrecken 7 und 8 über eine einzige reversible Förderstrecke mit der Zuführstrecke 4 verbunden sein.

Der Zielortspeicher 6, gemäß Ausführungsbeispiel ein Hochregallager, kann auch ein Karussellager bzw. ein frei verfahrbares oder schienengeführtes Speicher- bzw. Regalbediengerät für das Hochregallager oder Karussellager sein.

Der Zielortspeicher 6 kann auch ein Versandlager sein, wobei dann das Zwischenpuffersystem 10 als Versandpuffer bei Schieflast zwischen verschiedenen Versandbereichen dient.

Das Zwischenpuffersystems 10 kann auch Stapelmaschinen aufweisen, die von der Systematik her sogenannte Säulenstapler und grundsätzlich in der Lage sind, mehrere Gebindetypen zu stapeln.

Im Betrieb greift die Stapelmaschine ein Gebinde oder einen Gebindeteilstapel und hebt das Gebinde bzw. den Gebindeteilstapel hoch. Ein nachfolgendes Gebinde oder ein nachfolgender Gebindeteilstapel beispielsweise mit einer anderen Höhe fährt in die Maschine ein. Die Maschine stellt den hochgehobenen Stapel auf den eingefahrenen Stapel, positioniert sich neu und greift beide Stapel und hebt beide hoch. Nun fährt ein weiterer Stapel beispielsweise wieder mit einer anderen Höhe ein. Der Vorgang wird solange wiederholt, bis ein Turm definierter Höhe entstanden ist.

Entsprechend umgekehrt erfolgt die Entstapelung, um ein einziges Gebinde oder einen Gebindeteilstapel gewünschter Höhe über die Förderstrecke 8 dem Zielortspeicher 6 beispielsweise in Form eines Hochregallagers wieder zuzuführen.

Das vorgenannte Zwischenpuffersystem 10 ist in der Lage, das Beschickungsgut, während oder in Voraussicht einer Einlager-Überlast im Zielortspeicher im Zeitbereich der Zuführung, geordnet und definiert vollautomatisch oder zumindest teilautomatisch aufzunehmen, und das zwischengelagerte Beschickungsgut entsprechend einer ausgewählten logistischen Zuführungsstrategie wieder definiert, voll- oder zumindest teilautomatisch dem Zielortspeicher bzw. dem Speicherbediengerät des Zielortspeichers abzugeben, wenn die lastspezifische Aufnahmefähigkeit, d.h. eine ausreichende Aufnahmefähigkeit des Zielortspeichers wieder hergestellt ist.

Die Gesamtsteuerung und die Lagerverwaltung erfolgt über ein übergeordnetes Steuerungs- und Warehousemanagementsystem.

## Patentansprüche

1. Verfahren zum Zuführen von Beschickungsgut (11) in Form von Gebinden, Behältern, Kartons, Einzel- und/oder Bündelgut von einer Zuführstation über eine Zuführstrecke (4) zu einem Zielortspeicher (6) bzw. zu einem Speicherbediengerät des Zielortspeichers (6), vorzugsweise eines Hochregallagers in einer Kommissionieranlage, wobei während oder in Voraussicht einer Einlager-Überlast im Zielortspeicher (6) ein Zwischenpuffersystem (10) mit einem Zwischenpuffer (3) das Beschickungsgut (11) aufnimmt und nach einer Einlager-Überlast oder nach Beendigung der Gefahr einer Einlager-Überlast dem Zielortspeicher (6) wieder abgibt,
**dadurch gekennzeichnet,**
**dass** das Beschickungsgut (11) vor einer Aufnahme im Zwischenpuffer (3) des Zwischenpuffersystems (10) in einer Palettierungs-/ Depalettierungstation (2) palettiert und nach einer Zwischenpufferung im Zwischenpuffer (3) vor Abgabe an den Zielortspeicher (6) wieder depalettiert wird, wobei der Zwischenpuffer reversibel antreibbar ist.

2. Verfahren nach Anspruch 1,
**dadurch gekennzeichnet,**
**dass** bei lastspezifischer Aufnahmefähigkeit, d.h. bei ausreichender Aufnahmefähigkeit des Zielortspeichers (6) das am Zwischenpuffer (3) zwischengelagerte Beschickungsgut (11) über das Depalletierungssystem des Zwischenpuffersystems (10) dem Zielortspeicher (6) automatisch zugeführt wird.

3. Verfahren nach Anspruch 1 oder 2,
**dadurch gekennzeichnet,**
**dass** das Zwischenpuffersystem (10) das Beschickungsgut (11), während oder in Voraussicht einer Einlager-Überlast im Zielortspeicher (6), geordnet und definiert vollautomatisch oder zumindest teilautomatisch aufnimmt und entsprechend der ausgewählten logistischen Zuführungsstrategie wieder definiert, voll- oder zumindest teilautomatisch dem Zielortspeicher (6) abgibt.

4. Verfahren nach einem der Ansprüche 1 bis 3,
**dadurch gekennzeichnet,**
**dass** eine in der Zuführstrecke (4) angeordnete Entscheidungsstation (5) während oder in Voraussicht einer Einlager-Überlast des Zielortspeichers (6) das Beschickungsgut (11) dem Zwischenpuffersystem (10) zuweist.

5. Verfahren nach Anspruch 4,
**dadurch gekennzeichnet,**
**dass** ein übergeordnetes Steuerungs- und Wärehousemanagementsystem die Entscheidungsstation (5) als ausführendes Gewerk bedient bzw. ansteuert.

6. Verfahren nach Anspruch 4 oder 5,
**dadurch gekennzeichnet,**
**dass** die Entscheidungsstation (5) basierend auf der Auslastung des Zielortspeichers (6) das Beschickungsgut (11) durch Beschickungsgut- bzw. Behälterverfolgung oder Identifikation erkennt.

7. Verfahren nach einem der Ansprüche 4 bis 6,
**gekennzeichnet durch**
eine Zuführung vom Zwischenpuffersystem (10) zum Zielortspeicher (6), bei welcher eine Aussteuerung von vorrangig benötigtem Beschickungsgut über eine nachgereihte Entscheidungsstation noch ermöglicht wird.

8. Verfahren nach einem der Ansprüche 4 bis 7,
**dadurch gekennzeichnet,**
**dass** vorrangig benötigtes Beschickungsgut bereits bei der Entscheidungsstation (5) erkannt und direkt dem Zielortspeicher (6) zugeführt wird.

## Claims

1. Process for feeding products to be loaded (11) in the form of packing drums, containers, boxes, individually packed and/or bundled products from a feed station via a feed section (4) to a destination storage area (6) or to a storage area storage and retrieval unit of the destination storage area (6), preferably of a high-shelf storage area in a commissioning unit, wherein a buffering system (10) with a buffer (3) picks up the products to be loaded (11) during or in anticipation of an overload in the destination storage area (6) and releases it again to the destination storage area (6) after an overload or after the end of the risk of an overload,
**characterized in that**
the product to be loaded (11) is palletized in a palletizing/depalletizing station (2) before being picked up in the buffer (3) of the buffering system (10) and is again depalletized after buffering in buffer (3) before being released to the destination storage area (6), wherein the buffer is a reversibly drivable buffer (3).

2. Process in accordance with claim 1,
**characterized in that**
in case of a load-specific storage capacity, i.e., in case of sufficient storage capacity of the destination storage area (6), the product to be loaded (11) being buffered at buffer (3) is fed automatically to the destination storage area (6) via the depalletizing system of buffering system (10).

3. Process in accordance with claim 1 or 2,
**characterized in that**
the buffering system (10) picks up the products to be loaded (11) during or in anticipation of an overload in the destination storage area (6) fully automatically or at least partly automatically in an ordered and defined manner and again releases same fully or at least partly automatically in a defined manner to the destination storage area (6) corresponding to the selected logistic feeding strategy.

4. Process in accordance with one of the claims 1 through 3,
**characterized in that**
a decision station (5) arranged in feed section (4) assigns the products to be loaded (11) to the buffering system (10) during or in anticipation of an overload of the destination storage area (6).

5. Process in accordance with claim 4,
**characterized in that**
a higher-level control and warehouse management system operates or actuates the decision station (5) as an executing mechanism.

6. Process in accordance with claim 4 or 5,
**characterized in that**
the decision station (5) recognizes the product to be loaded (11) by tracking the product to be loaded or container or by identification on the basis of the load of the destination storage area (6).

7. Process in accordance with one of the claims 4 through 6,
**characterized by**
feeding from the buffering system (10) to the destination storage area (6), during which selection of products to be loaded, which are needed in a prioritized manner, is still made possible via a decision station arranged downstream.

8. Process in accordance with one of the claims 4 through 7,
**characterized in that**
the product to be loaded, which are needed in a prioritized manner, is recognized already at the decision station (5) and is fed directly to the destination storage area (6).

## Revendications

1. Procédé d'amenée de charges (11) prenant la forme de conteneurs, de bacs, de cartons, de marchandises individuelles ou de paquets, d'une station d'amenée à un magasin local cible (6) et/ou à un appareil de commande de magasin du magasin local cible (6), de préférence d'un rayonnage en hauteur prévu dans une installation de préparation de commandes, via un tronçon d'amenée (4), un système de tampon intermédiaire (10) prenant la charge (11) au moyen d'un tampon intermédiaire (3) pendant une surcharge d'entreposage dans le magasin local cible (6) ou en prévision de celle-ci et la restituant après une surcharge d'entreposage ou à la fin d'un risque de surcharge d'entreposage dans le magasin local cible (6),
**caractérisé en ce que**
la charge (11) est mise en palette dans une station de palettisation / dépalettisation (2) avant d'être prise dans le tampon intermédiaire (3) du système de tampon intermédiaire (10) et est de nouveau sortie de palette avant d'être restituée au magasin local cible (6) après une mise en tampon intermédiaire dans le tampon intermédiaire (3), le tampon intermédiaire pouvant être entraîné de façon réversible.

2. Procédé selon la revendication 1,
**caractérisé en ce que**
en présence d'une capacité de réception spécifique à la charge, c'est-à-dire en présence d'une capacité de réception suffisante du magasin local cible (6), la charge (11) stockée temporairement dans le tampon intermédiaire (3) est automatiquement amenée au magasin local cible (6) via le système de dépalettisation du système de tampon intermédiaire (10).

3. Procédé selon la revendication 1 ou 2,
**caractérisé en ce que**
le système de tampon intermédiaire (10) reçoit la charge (11) de façon entièrement automatisée ou au moins en partie automatisée, de façon ordonnée et définie, pendant une surcharge d'entreposage dans le magasin local cible (6) ou en prévision de celle-ci et définit ensuite, en fonction de la stratégie d'amenée logistique sélectionnée, sa restitution entièrement automatisée ou au moins en partie automatisée au magasin local cible (6).

4. Procédé selon l'une quelconque des revendications 1 à 3,
**caractérisé en ce que**
une station de prise de décision (5) disposée dans le tronçon d'amenée (4) attribue la charge (11) au système de tampon intermédiaire (10) pendant une surcharge d'entreposage du magasin local cible (6) ou en prévision de celle-ci.

5. Procédé selon la revendication 4,
**caractérisé en ce que**
un système de commande maître et de gestion d'entrepôt commande et/ou pilote la station de prise de décision (5) sous la forme d'une globalité à mettre à exécution.

6. Procédé selon la revendication 4 ou 5,
**caractérisé en ce que**
la station de prise de décision (5) détecte la charge (11) par le biais d'un suivi ou d'une identification de charge et/ou de conteneur sur la base de la capacité du magasin local cible (6).

7. Procédé selon l'une quelconque des revendications 4 à 6,
**caractérisé par**
une amenée du système de tampon intermédiaire (10) au magasin local cible (6) pour laquelle une commande séparée d'une charge prioritaire est encore possible via une station de prise de décision placée en aval.

8. Procédé selon l'une quelconque des revendications 4 à 7,
**caractérisé en ce que**
la charge prioritaire est déjà détectée par la station de prise de décision (5) puis directement amenée au magasin local cible (6).
